Europäisches Patentamt

European Patent Office

Office européen des brevets

(19)

(11) Veröffentlichungsnummer: **0 173 046**
**B1**

(12) **EUROPÄISCHE PATENTSCHRIFT**

(45) Veröffentlichungstag der Patentschrift: **16.08.90**

(51) Int. Cl.⁵: **A 01 G 13/10**

(21) Anmeldenummer: **85108731.2**

(22) Anmeldetag: **12.07.85**

(54) Forstpflanzenschutzvorrichtung.

(30) Priorität: **17.08.84 DE 8424459 u**
**12.12.84 DE 8436406 u**

(43) Veröffentlichungstag der Anmeldung:
**05.03.86 Patentblatt 86/10**

(45) Bekanntmachung des Hinweises auf die
Patenterteilung:
**16.08.90 Patentblatt 90/33**

(84) Benannte Vertragsstaaten:
**AT CH DE FR LI**

(56) Entgegenhaltungen:
**CH-A- 126 736**
**CH-A- 361 691**
**DE-C- 814 071**
**DE-U-7 300 811**
**FR-A- 432 099**
**GB-A- 149 102**
**US-A-1 790 259**
**US-A-2 056 136**
**US-A-3 397 485**

(73) Patentinhaber: **Hohenlohe-Waldenburg KG**
**Spezial-Maschinenbau**
**Auf dem Zimmerplatz 1**
**D-7112 Waldenburg (DE)**

(72) Erfinder: **Fürst zu Hohenlohe-Waldenburg,**
**Friedrich Karl**
**Schloss**
**D-7112 Waldenburg/Württ (DE)**

(74) Vertreter: **Riederer Freiherr von Paar zu**
**Schönau, Anton**
**Van der Werth, Lederer & Riederer Freyung 615**
**Postfach 2664**
**D-8300 Landshut (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung bezieht sich auf eine Forstpflanzenschutzvorrichtung nach dem Oberbegriff des Anspruchs 1, wie sie etwa aus der US-A 2 056 136 bekannt ist. Solche Pflanzenschutzvorrichtungen werden als Baumschützer in Forstkulturen zum Schutz gegen Wildverbiß und Verfegen von Jungpflanzen verwendet.

Allgemein können zum Schutz der Jungpflanzen Drahthosen verwendet werden, die um die Pflanze gelegt werden und an einem Holzpflock verkrampt werden. Gegebenenfalls werden auch mehrere Pflöcke eingeschlagen, was zu einer kleinen Umzäunung der Jungpflanze führt. Drahthosen haben gegenüber Zäunen den Vorteil, daß die Äsungsfläche zwischen den Pflanzen für das Wild frei bleibt und daß fallende Bäume weniger Schaden anrichten. Im Vergleich zur Heisterpflanzung bleibt die Pfahlwurzelbildung gesichert. Andererseits haben die herkömmlichen Drahthosen eine erhebliche Montagezeit, der Aufbau und später der Abbau sind zeit- und insofern kostenintensiv. Sie erfüllen auch technisch nicht voll die Anforderungen, da sie einerseits nicht standfest sind; die Holzpfosten werden durch Bodenfrost herausgehoben oder verfaulen im Lauf der Zeit. Andererseits kann die Drahthose selbst verformt werden, z. B. durch Schneebewegungen am Hang, und schützt die Pflanze dann nur noch unvollkommen. Kleine Pflanzen können durch Unkraut, das in der Drahthose wächst, dort vom Wild nicht abgeäst wird und von Hand nur schwer entfernt werden kann, erstickt werden. Schließlich können Wipfel durch Drahtmaschen seitlich herauswachsen und sind kaum ohne Beschädigung zurückzuholen. Beim Abbau der Drahthose, wenn die Pflanze darin groß geworden ist, wird sie zerschnitten, was eine Wiederverwendung hindert, oder wird sie der Pflanze über "die Ohren" gezogen, was zu Beschädigungen der Pflanze führen kann.

Es sind verschiedene abgewandelte Fertigdrahthosen und Pflanzenschützer bekannt geworden. Ein bekannter Pflanzenschützer (GB-A 149 102) dient dem Schutz von Selleriepflanzen, während um diese ein Erdwall gezogen wird. Die Schutzvorrichtung besteht aus einem um ein Scharnier zu öffnenden Rohrstück, dessen Scharnierbolzen am unteren Ende des Rohrstücks abgewinkelt verläuft, um eine Fußraste zu bilden, die in den Boden eingetreten wird. Nach Beendigung der Erdtätigkeit wird die Schutzvorrichtung, die als eine Art Schalung gedient hat, wieder herausgezogen und zur nächsten Pflanze verbracht. Dieser schon ziemlich alte Stand der Technik hat auf die Entwicklung von Forstpflanzenschützern keinen Einfluß genommen.

Ein bekannter Baumschützer (DE-PS 814071) besteht aus einem Gitter, das an zwei kurzen Pflöcken sitzt und unelastisch um den Baum gebogen wird. Ein solcher Baumschützer kann zwar schonend um den Baum verbracht werden, aufgrund seiner schwachen Verankerung und leichten Verbiegbarkeit bietet er jedoch nur ungenügenden Schutz. Zwischen den Pflöcken hat er ein unbiegbares Segment. Konnte ein Pflock in den Boden eingetrieben werden, während der andere auf einen Stein oder eine Wurzel stößt, so muß die gesamte Installation wieder gelöst und neu positioniert werden, mit der Gefahr von Verbiegungen.

Ein weiterer bekannter Gitter-Baumschützer (US-A 2 056 136) besteht aus zwei starren Halbschalen, die zu einer rohrförmigen Gitterhaube zusammengesetzt werden und an den beiden Berühr-Längslinien jeweils mit einem dünnen Stab verbunden und im Boden verpflockt werden. Durch die Verwendung der beiden Stäbe kann die Pflanzenschutzvorrichtung zwar dem gefürchteten Seitendruck, insbesondere Schneedruck oder Pflanzenwachstumsdruck, aber auch einer Verschiebetendenz aufgrund von Stößen und dergleichen, einigermaßen standhalten, jedoch erweist sich wiederum die Verwendung zweier Pflöcke als nachteilig, zumal diese wie Nägel mit einem Werkzeug in den Boden eingetrieben werden müssen. Die Gitterhaube sitzt stets unten am Boden auf, ein Herauswachsen oder ein Entfernen von Unkraut, das unter der Gitterhaube wächst, ist kaum möglich.

Demgegenüber liegt der Erfindung die Aufgabe zugrunde, eine Pflanzenschutzvorrichtung zu schaffen, die die Eigenschaften der leichten Auf- und Abbaubarkeit, der Wartungsarmut und des schädigungsfreien Pflanzenschutzes, zu dem auch der Widerstand gegen seitlichen Schub und Biegung gehört, kombiniert. Diese Aufgabe wird durch die im Anspruch 1 gekennzeichnete Erfindung gelöst. Durch diese Ausbildungsweise wird eine völlig vorfabrizierbare Pflanzenschutzvorrichtung geschaffen, deren Schutzgitter in Form der Gitterhaube der Pflanze weder beim Aufbau noch beim Abbau "über die Ohren" gezogen werden muß, sondern in schonender Weise um sie herumgelegt wird und durch erneutes ganzes oder teilweises Öffnen hinsichtlich der Erfassung des Wipfels oder einzelner Äste leicht justiert werden kann. Es genügt ein einziger Pflock, der ausreichend tief in den Boden einsteckbar sein muß, um den erforderlichen Halt zu liefern. Er ergibt die einzige Fixlinie der Gitterhaube, so daß dem Aufbiegen entlang dem Haubenumfang kein Hindernis entgegensteht und auch die Abhängigkeit von Einsteckhindernissen im Boden, wie Steinen, gering ist. Ist der Pflock nicht ganz eingesenkt oder hat er sich wieder um ein Stück herausgehoben, so ist dies sofort sichtbar und durch Eintreten mit Hilfe der Fußraste behebbar. Das Einstecken des Pflocks erfolgt mit Hilfe der Fußraste ohne spezielles Werkzeug und der Dorn an der Fußraste hält die Pflanzenschutzvorrichtung gegen Verdrehen gesichert, so daß auch keine erheblichen von der Gitterhaube ausgeübten Seitenkräfte, die zu einem verbogenen Wachstum führen können, auf die Pflanze einwirken.

Pflöcke mit einer Knickstelle zum Eintreiben ohne Werkzeug und mit einem dornartigen Winkel, der in die Erde einsticht, sind an sich bekannt (US-A 3 397 485), jedoch in einem Zusammenhang, in dem es auf eine Verdrehung des Pflocks weniger ankommt, da dort der Pflock mit der Pflanze nur über ein Band verbunden ist. Die Knickstelle des bekannten Pflocks begrenzt außerdem dessen Steifigkeit.

Eine besondere Ausführung stellt eine federnd aufbiegbare Gitterhaube dar, wobei als Formen der Gitterhaube z. B. eine an sich bekannte (DE-PS 130902) konische Form oder auch eine mehrteilige Ausführung in Frage kommen. Bei der mehrteiligen Ausführung können die Teile umfangsmäßig oder axial getrennt sein, letzteres etwa gemäß Anspruch 3, also mit Hose und Jacke, wobei ein unterer konischer Teil als Hose und ein oberer zylindrischer Teil als Jacke bezeichnet werden können. Mit einer derartigen kombinierten Form lassen sich die Anforderungen noch genauer der jeweiligen Pflanze anpassen, insbesondere kann der Baumschützer auch nach dem Schieben eines langen Gipfeltriebs noch weiterverwendet werden und seine Schutzwirkung entfalten. Diese axial zweiteilige Ausführung erfordert andererseits einen etwas höheren Aufwand für Herstellung und Lagerung.

Zur erleichterten Herstellung kommt eine schraubenlinige Ausführung, insbesondere aus Draht, in Frage, die entlang dem offenen Spalt aufgeschnitten ist. Es können jedoch auch einzelne parallele horizontale aufgeschnittene Drahtringe sein, oder die Gitterhaube kann aus ringförmigen oder halbringförmigen, jeweils am Spalt endenden horizontal liegenden und in ihrer Blechebene vertikal oder in der Konusfläche verlaufenden Blechstreifen bestehen, die nach außen federnd aufbiegbar sind. Enden die Drähte oder Blechstreifen jeweils einzeln am Spalt, so kann in jeder Höhe der einzelne Draht oder Streifen nach außen gebogen werden. Dies kann beispielsweise zur Lageregulierung einzelner Triebe oder Äste nützlich sein, führt jedoch andererseits zu scharfen Kanten oder Spitzen, die wegen Verletzungsgefahr unerwünscht sind. Alternativ kann der Spalt durch Randstreifen begrenzt sein, die mit den einzelnen an den Spalt herankommenden Gitterstäben oder -drähten verbunden sind. In diesem Fall können die durch diese Randstreifen zusammenhängenden Hälften der Gitterhaube jeweils nur als Ganzes aufgebogen werden bzw. wieder zurückfedern.

Die Konstruktion des Gitters sieht zweckmäßigerweise so aus, daß die einzelnen Windungen oder Ringe der Gitterhaube entlang einer achsparallelen Linie eine Rückenlinie haben, an der Punkte zum Verbinden mit dem Pflock liegen. Sofern der Spalt nicht durch Randstreifen gesäumt ist, die die einzelnen federnden Windungen oder Ringe zusammenhalten, oder sonstige vergitternde Möglichkeiten vorgesehen sind, erfüllt die Rückenlinie in Form eines jeweils an den Windungen oder Ringen befestigten Stabs auch den Zweck der gegenseitigen Verbindung und damit der Vergitterung der einzelnen Haubenelemente. Als bevorzugte Formen der Gitterhaube seien solche mit kreisförmigen Horizontalschnitten, die eine Entwicklung der Pflanze in alle Richtungen ermöglichen, solche mit ovalen Horizontalschnitten für Fälle, bei denen der Pflock in größerem Abstand zum Pflanzenfuß eingetreten werden soll, oder polygonale Querschnitte, die eine leichte und stabile Stapelung von umfangsmäßig geteilten Gitterteilen ermöglichen, genannt.

Nach Anspruch 8 wird eine Pflanzenschutzvorrichtung geschaffen, die die Eigenschaften der leichten Auf- und Abbaubarkeit, der Wartungsarmut, des schädigungsfreien Pflanzenschutzes und der raumsparenden Lagerbarkeit kombiniert. Das Schutzgitter wird in Form der Gitterhaube zusammengesetzt und dabei in schonender Weise um die Pflanze herumgelegt, wobei sie im Bedarfsfall durch erneutes ganzes oder teilweises Öffnen hinsichtlich der Erfassung des Wipfels oder einzelner Äste leicht justiert werden kann. Die Einzelteile benötigen als Lagerraum wesentlich weniger Volumen als das gesamte Volumen der schließlichen Rohrform der Gitterhaube, insbesondere können die Teile gestapelt werden, was wegen der oft erforderlichen großen Stückzahl für größere Forstflächen sehr wichtig ist. Die Längslinien sind im einfachsten Fall Mantellinien, sie können jedoch auch schrägverlaufende Linien, Zickzack-Linien oder dergleichen mit Längskomponente sein. Die Teile sind, bezogen auf die allgemeine Rohrform, vorzugsweise Gitterrohrsegmente. Ihre Verbindung ist entlang der einen Längslinie durch die beiderseitige Anbringung am Pflock, und entlang der anderen Längslinie durch Verbindungslaschen etwa in Form von Bügeln oder Klammern bewerkstelligt. Sind die Teile formidentische Hälften der Gitterhaube, so muß nur eine einzige Ausführung des Teils bereitgehalten werden. Die Stapelbarkeit und Handhabung wird durch die Prismen- oder Pyramidenform gemäß Anspruch 11 verbessert.

Zweckmäßigerweise befinden sich an der Gitterhaube und/oder am Pflock in unterschiedlicher Höhe Befestigungselemente, so daß die Gitterhaube oder die Teile der Gitterhaube in veränderlicher Höhe am Pflock angebracht werden können. Beispielsweise ist es möglich, hierdurch beim Wachstum des Jungbaums eine "mitwachsende" Schutzvorrichtung zur Verfügung zu haben, indem die Höhe über mehrere Jahre nachgestellt wird. Die Höhenveränderlichkeit läßt sich relativ einfach durch Befestigungspunkte in Form von Einfräsungen und Befestigungslaschen oder in Form von Einschnitten zum Einsetzen von Gitterdraht erzielen, so daß die Gittermaschen das Verstellbarkeitsraster ergeben. Diese Höhenverstellbarkeit ist insbesondere deshalb sinnvoll, weil der Pflock eine definierte Einstecktiefe hat, die mit Hilfe der das Einstecken erleichternden Fußraste festgelegt ist. Die Lösbarkeit der Gitterhaube vom Pflock, insbesondere die Möglichkeit, ohne Werkzeug oder allenfalls mit einer Handzange einen schnellen Ab- und Wiederaufbau zu bewirken, ermöglicht auch die vorübergehende Wegnahme der Gitterhaube etwa beim Entunkrauten oder während Fäll- und Rückearbeiten.

Die zusätzlichen Gitterteile nach Anspruch 12 beugen einem Verbiß durch Rehe von ober her vor.

Weitere Einzelheiten, Vorteile und Weiterbildungen der Erfindung ergeben sich aus der folgenden Beschreibung bevorzugter Ausführungsbeispiele unter Bezugnahme auf die Zeichnung. Es zeigen:

Figur 1 in perspektivischer Darstellung eine Ausführungsform einer erfindungsgemäßen Pflanzenschutzvorrichtung;

Figur 2 eine Teilansicht des Pflocks der Pflanzenschutzvorrichtung nach Figur 1.

Figur 3 eine auseinandergezogene perspektivische Darstellung einer abgewandelten Ausführungsform der Pflanzenschutzvorrichtung;

Figur 4 eine Vorderansicht der installierten Pflanzenschutzvorrichtung nach Figur 3;

Figur 5 in perspektivischer Darstellung eine weitere Ausführungsform einer erfindungsgemäßen Pflanzenschutzvorrichtung;

Figur 6 eine auseinandergezogene Seitenansicht einer abgewandelten Pflanzenschutzvorrichtung, die insbesondere als Verbißschutz dient;

Figur 7 eine Draufsicht auf die Pflanzenschutzvorrichtung nach Figur 6 in teilweise eingefaltetem Zustand;

Figur 8 eine perspektivische Ansicht der Pflanzenschutzvorrichtung nach Figuren 6 und 7 in der Funktionsstellung.

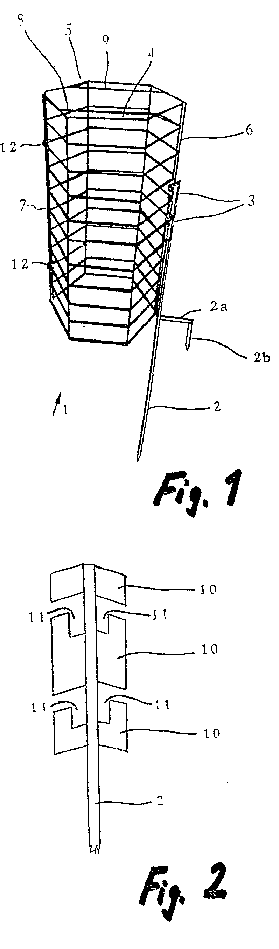

Die Pflanzenschutzvorrichtung nach Figur 1, die als Baumschützer eingesetzt werden soll, besteht aus einer Gitterhaube 1 und einem Pflock 2, die an Befestigungspunkten 3 lösbar miteinander verbunden sind. Die Gitterhaube 1 besteht aus zwei Teilen 4 und 5 in Form von gebogenen Drahtgeflechtfeldern aus Draht von 3 mm Durchmesser und gegebenenfalls etwas stärkerem Draht entlang achsparallelen Längslinien 6 und 7, an denen die beiden Teile der Gitterhaube zu deren Bildung miteinander lösbar verbunden sind. Die dargestellte Gitterhaube weist Maschen in Form horizontaler Sechseckringe auf, die an den Ecken durch vertikale Drähte verbunden sind. Bei elf Ringen in einem Abstand von 7 cm ergibt sich eine Gesamthöhe von 70 cm. Die Gitterhaube 1 hat insgesamt die Form eines sechskantigen Prismas, jeder der Teile 4 und 5 umfaßt drei Flächen dieses Prismas. An der sechseckigen Oberseite der Gitterhaube sind noch, jeweils zwischen den endseitigen Sechseckkanten des einzelnen Teils 4 bzw. 5, entlang jeweils einer Sehne des Sechsecks Drähte 8 bzw. 9 angeschweißt, die einen Rehverbiß der Pflanze von oben her hindern.

Die beiden Teile 4 und 5 können an sich völlig formidentisch sein, für Lagerung und Transport kann ein einziger Stapel solcher Teile aufgehäuft werden. Es müssen dann für beide Teile 4 und 5 oben und unten und/oder rechts und links ohne weiteres vertauschbar sein. Bei der in Fig. 1 dargestellten Ausführung liegt diese Formidentität nur mit Vorbehalt vor. Soweit bisher beschrieben, sind die Teile 4 und 5 insoweit formidentisch, als sie links-rechts-vertauschbar sind, wegen der Drähte 8 und 9 sind sie aber nicht oben-unten-vertauschbar.

Zur Befestigung der Teile 4 und 5 der Gitterhaube 1 am Pflock 2 weist dieser angeschweißte zum Teil eingeschnittene Bleche 10 auf, die insgesamt vier Einschnittflächen 11 freilassen und die jeweils auf einer Seite des Pflocks im der sechseckigen Querschnittfläche der Gitterhaube angepaßten Winkel abstehen. Die Einschnittflächen 11 weisen eine L-Form auf und haben einen auf das Gitterraster abgestimmten gegenseitigen Höhenabstand. Die beiden Teile 4 und 5 können jeweils mit benachbarten horizontal verlaufenden Drähten in eine der L-förmigen Einschnittflächen 11 eingeschoben werden. Ein Halt an den Blechen 10 ist möglich, indem diese oder die Drähte sich federnd so biegen, daß der Halt der Gitterhaube 1 sich nicht nur durch ihr Eigengewicht, sondern auch durch die Reibung des Drahts an den Flächen ergibt. Bevorzugt wird jedoch ein formschlüssiger Halt, der dadurch hergestellt wird, daß die Blechenden mit einer Zange nach vorne oder hinten um den Gitterdraht umgebogen werden. Hierdurch kann die Gitterhaube nicht durch Fremdkräfte aus der Halterung herausgehoben werden. Ist das Herausheben jedoch erwünscht, so wird das Blech vorübergehend wieder geradegebogen. An den Blechen 10 kann die Gitterhaube 1 in sieben Stufen entsprechend dem Raster der Drahtringe höhenverstellt werden. Die Elastizität des Blechs ermöglicht bei der Montage eine gewisse Verschwenkbarkeit der Teile 4 und 5.

Die Längslinie 7 bildet einen Spalt zwischen den Teilen 4 und 5, der mit Hilfe von klammerartigen Befestigungslaschen 12, die die Teile 4 und 5 zusammenhalten, überbrückt ist. Diese Befestigungslaschen können aufgesteckt oder, je nach Konstruktion, klippartig angebracht werden. Damit nicht bei der Arbeit im Forst Kleinteile lose bereitgehalten werden müssen, sind gemäß einer speziellen Ausführungsform die Befestigungslaschen von vorneherein am einen der Teile 4, 5 befestigt und werden dann nur mit dem anderen dieser Teile verhakt. Hierbei ist es entweder möglich, Befestigungslaschen auch entlang der Längslinie 6 auf der Pflockseite zu haben, wo sie eigentlich gar nicht benötigt werden; die Teile 4 und 5 können dann identisch sein. Oder es wird nur einer der Teile mit den Befestigungslaschen 12 vorbestückt, wodurch sich die Teile 4 und 5 voneinander unterscheiden und getrennt oder abwechselnd zu stapeln sind.

Der Pflock 2 besteht aus einem unten angespitzten Rundeisen, an dem in einer Höhe, die beim eingesteckten Pflock dem Erdniveau entsprechen soll, eine Fußraste 2a angeschweißt ist. Diese Fußraste kann zum Eintreten des Pflocks verwendet werden, so daß dies im wesentlichen ohne Werkzeug möglich ist. Am Ende der Fußraste 2a steht nach unten ein unten angespitzter Dorn 2b ab, der ebenso wie der Fußteil des Pflocks 2 beim Eintreten in den Erdboden eindringt und somit als Verdrehungsschutz für die montierte Pflanzenschutzvorrichtung wirkt. Durch großzügige Bemessung der Höhe des Pflocks 2 und Anbringen mehrerer Bleche 10 läßt sich erreichen, daß an ihm auch mehrere Gitterhauben 1 übereinander befestigt werden können.

Zum Installieren der Pflanzenschutzvorrichtung wird zunächst mit Hilfe der Fußraste 2a der Pflock 2 so tief in den Boden eingetreten, daß die am Pflock 2 angeschweißte Fußraste 2a am Boden aufliegt. Durch die Fußraste 8 ist also sowohl eine Erleichterung des Eintreibens gegeben, als auch eine Höhenmarke gesetzt. Die Einschnittflächen 11 haben somit eine definierte Höhe über dem Erdboden, auf die die Höhe der Gitterhaube 1 abgestimmt ist. Durch Einhängen von zweien der Drahtringe der durch die Laschen 12 bereits auf einer Seite geschlossenen Gitterhaube 1 in jeweils eine der Einschnittflächen 11 und Umbiegen der Enden eines der eingeschnittenen Bleche 10, oder durch Hinhalten der Gitterhaube 1 und Vorbiegen der Enden der eingeschnittenen Bleche 10 und Umrollen der Gitterdrähte kann eine höhere oder niedrigere Stellung der Gitterhaube 1 gewählt werden. Eine Anbringung mit einem unteren Freiraum von 20 cm Höhe genügt für den Wildschutz und erlaubt das Entunkrauten auch ohne Abnahme der Gitterhaube. Die Standfestigkeit des Pflocks und die Steifigkeit des Drahts widerstehen üblichen Verformungsbelastungen wie zum Beispiel seitlichem Schneedruck.

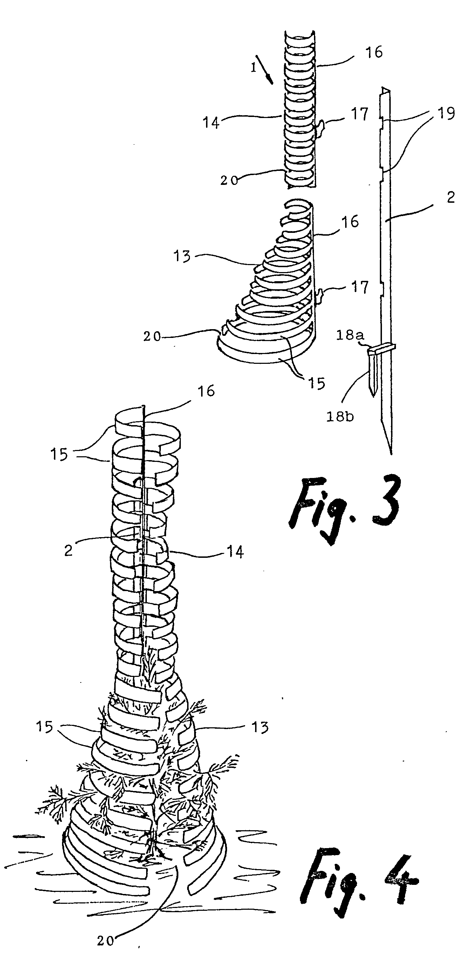

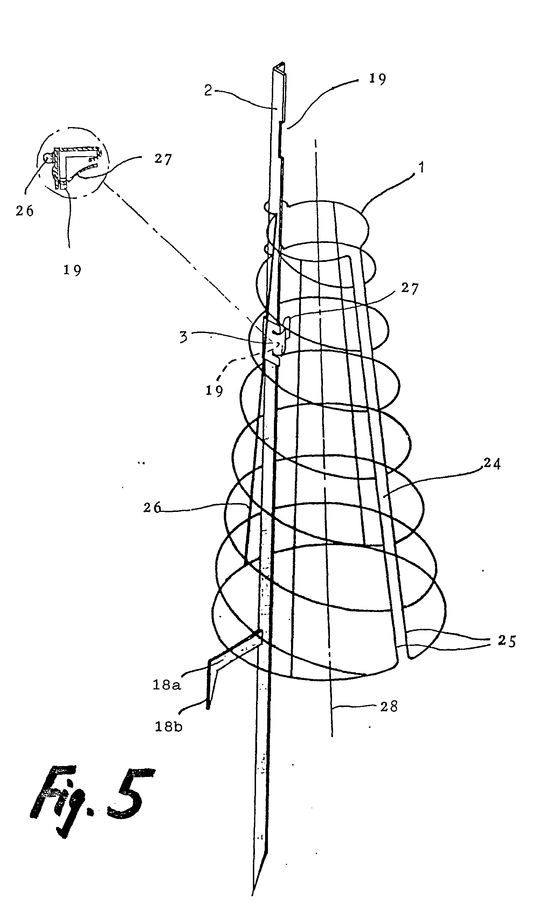

Eine andere, etwas aufwendigere Form der Pflanzenschutzvorrichtung ist in den Figuren 3 und 4 dargestellt. Sie besteht aus drei lösbar miteinander verbundenen Teilen, nämlich dem Pflock 2 und einer zweiteiligen Gitterhaube 1, die ihrerseits aus einer Hose 13 und einer Jacke 14 besteht. Die Hose ist nach unten zu konisch erweitert, die Jacke 14 hat im wesentlichen eine zylindrische Konfiguration. Die Hose 13 und die Jacke 14 bestehen aus bogenförmig rundgelegten Streifen 15 aus verzinktem Stahlblech von 1 mm Stärke, die jeweils an ein eine Rückenlinie 16 bildendes Profileisen angeschweißt sind. An diesem Profileisen sitzt bei der Hose 13 und bei der Jacke 14 je eine Befestigungslasche 17 nach Art eines Klippverschlusses.

Der Pflock 2 ist 1,40 m lang und besteht aus 3 mm-Winkeleisen. Bei 0,5 m von unten ist eine der Fußraste 2a entsprechende Fußraste 18a angeschweißt, die einen nach unten abstehenden Dorn 18b aufweist. Weiterhin weist der Pflock drei Einfräsungen 19 in unterschiedlichen Höhen auf.

Wiederum wird der Pflock 2 mit Hilfe der Fußraste 18a eingetreten, dann wird die Hose 13 mit Hilfe der Befestigungslasche 17 so am Pflock 12 befestigt, daß hierdurch die Pflanze bis zu einer Höhe von 50 cm geschützt wird. Gleichzeitig wird ihr genügend Raum gelassen, sich mit den Bodenästen auszubreiten. Wächst der Baum über 50 cm hinaus, so wird der Gipfeltrieb durch die Jacke 14 geschützt. Die Befestigungslasche 17 der Jacke 14 ist im Vergleich zu deren Höhenerstreckung asymmetrisch angebracht, so daß unter Berücksichtigung der beiden möglichen Montagestellungen der Jacke einerseits und der beiden zur Verfügung stehenden Einfräsungen 19 am Pflock 12 andererseits die Jacke 14 in vier verschiedenen Höhen angebracht werden kann.

Je nach dem Grad des notwendigen Schutzes können die Hose 13 und die Jacke 14 gemeinsam verwendet werden oder kann man sich mit einer der beiden begnügen. Beide Teile weisen einen Spalt 20 auf, von dem aus sie aufbiegbar sind. Die beiderseitigen Streifen können sich im Ruhezustand auch um ein Stück überlappen, so daß der Spalt einen teilweise umlaufenden Verlauf hat.

Die Ausführung in Hose und Jacke ist auch in einer dem Aufbau nach Fig. 1 entsprechenden Drahtausführung möglich.

Auch diese Ausführung erlaubt einen schnellen Aufbau und Abbau ohne Werkzeug und ergibt eine hohe Standfestigkeit. Sie ermöglicht das Auseinanderbiegen von Jacke und Hose nach der Seite hin, ohne daß Zweige beschädigt werden. Beim Abbau werden die Teile von der mittlerweile herangewachsenen Pflanze nicht nach oben abgezogen, sondern durch Aufbiegen seitlich weggenommen. Die Schutzvorrichtung kann dann an anderer Stelle wiederverwendet werden.

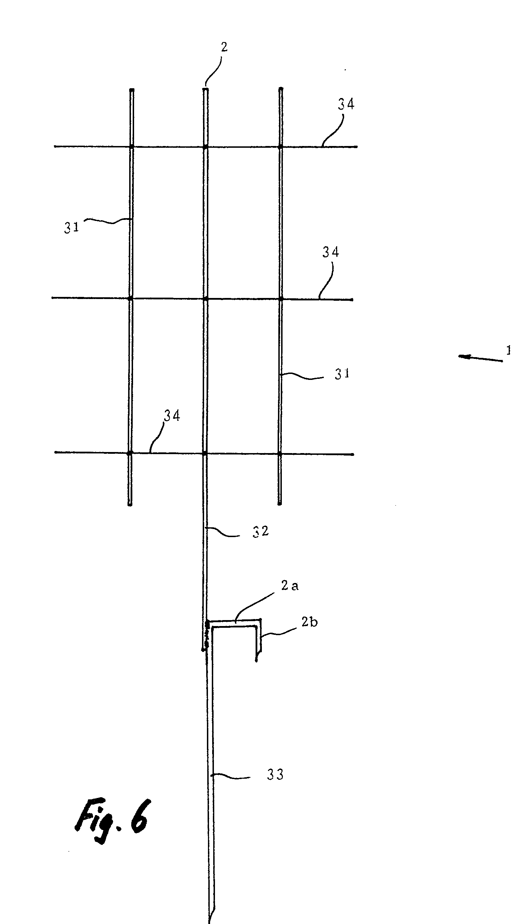

Die Pflanzenschutzvorrichtung nach Figur 5 ist wiederum zweiteilig ausgeführt und besteht aus der Gitterhaube 1 und dem Pflock 2, die am Befestigungspunkt 3 lösbar miteinander verbunden sind.

Die Gitterhaube 1 besteht hier aus einer konischen Drahthose, deren Draht mit 3 mm Durchmesser entlang einer sich im Konusdurchmesser von oben nach unten vergrößernden Schraubenlinie verläuft, die jedoch entlang einer Mantellinie durch einen Spalt 24 unterbrochen ist. Entlang dem Spalt 24 sind die einzelnen Windungen der Drahtschraube aufgeschnitten und mit jeweiligen Begrenzungsdrähten 25 verbunden, beispielsweise verschweißt. Diametral gegenüber dem Spalt 24 befindet sich eine Rückenlinie 26, die praktisch das Rückgrat der Gitterhaube darstellt. Diese Rückenlinie besteht aus kräftigem Draht von 4 mm Durchmesser, an dem jede der Windungen der Drahtschraube und auch eine horizontale Deckwindung und eine horizontale Basiswindung angeschweißt sind. Am Draht der Rückenlinie 26 hängt in einer gegebenen Höhe eine Befestigunglasche 27, die der Befestigung der Gitterhaube 1 am Pflock 2 in der in der Figur 5 und deren Nebenfigur dargestellten Weise dient.

Der Pflock 2, der aus einem L-Profil-Eisen mit 2 cm Schenkelbreite besteht, weist in Übereinstimmung mit dem Pflock nach Fig. 3 die angeschweißte Fußraste 18a mit dem Dorn 18b und die zwei Einfräsungen 19 auf. Die Einfräsungen 19 sind unter gegenseitigem Abstand entlang der Länge des Pflocks 2 angebracht und dienen dem Einhägen der Befestigungslasche 27, wodurch die Gitterhaube in zwei verschiedene Höhenstellungen am Pflock arretiert werden kann. Während die Höhe des Pflocks etwa 1,50 m beträgt, ist die Gitterhaube 1 etwa 70 cm hoch.

Die Hüllkurve der Gitterhaube bildet einen Kegelstumpf, dessen Achse mit 28 bezeichnet ist.

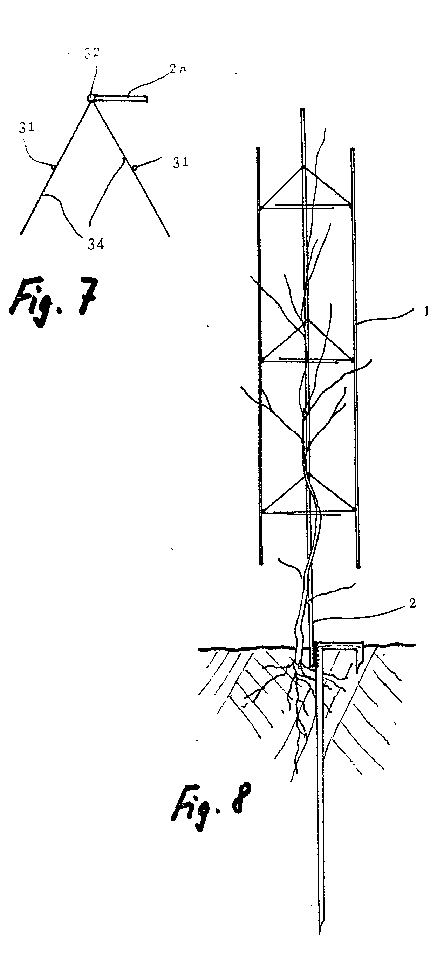

Die Figuren 6 bis 8 zeigen eine Pflanzenschutz-vorrichtung, die insbesondere als Schutz gegen Verfegen junger Pflanzen durch Rehböcke dienen kann. Die Gitterhaube 1 besteht hier aus einem Dreikant-Drahtprisma, dessen Längskanten einerseits durch den Pflock 2 und andererseits durch zwei 4 mm starke Längsstäbe 31 aus Stahl gebildet werden. Der Pflock 2 selbst besteht bei dieser Ausführungsform aus einem oberirdischen Stab 32 von 8 mm Stärke und einem etwas kräftigeren unterirdischen Teil 33 aus Baueisen von 8 bis 10 mm Stärke, der auch bei Vorhandensein leichterer Hindernisse in das Erdreich eingetreten werden kann. Der Pflock weist wiederum die Fußraste 2a und den Dorn 2b auf.

In der installierten Form werden die Stäbe 31 und 32 vertikal angeordnet, während horizontal Gitterdrähte 34 von 2,2 mm Stärke verlaufen, die an den Stäben 31 und 32 angeschweißt sind. Beim beschriebenen Beispiel sind drei solcher Gitterdrähte 34 vorhanden, die praktisch drei Zwischenebenen in zwei gleichen Abständen bilden.

Die Pflanzenschutzvorrichtung kann in der in Fig. 6 gezeigten flachen Form geliefert werden und wird bei der Installation zusammengefaltet. Wird sie zu einem gleichseitigen Prisma zusammengefaltet, so überlappen sich die freien, von den Stäben 31 überstehenden Enden der Gitterdrähte 34. Zum Umgeben einer etwas üppigeren Pflanze kann die Pflanzenschutzvorrichtung jedoch auch zu einem etwas großflächigeren Grundriß zusammengefaltet werden, der auch Viereckform haben kann, indem die freien Draht-tenden nicht auf den benachbarten Längsstab 31 zu, sondern mit einem Winkel nach außen gebogen werden. Hierdurch entsteht eine Art Vierkantprisma, an dessen vierter Kante aber kein Längsstab mehr verläuft. Da die Pflanzenschutzvorrichtung nur mit einem einzigen Pflock im Boden verankert ist, bestehen für das von den beiden Seiten her erfolgende Falten um die Pflanze herum keine starren Beschränkungen.

Durch die Länge des Pflocks 2 in seinem unterirdischen Teil 33 und durch die Robustheit des Teils ergibt sich für die Pflanzenschutzvorrichtung einerseits eine leichte Installation und andererseits ein sehr stabiler Stand, der sogar der Pflanze eine Stütze verleiht.

Insbesondere bei der Pflanzenschutzvorrichtung nach den Fig. 6 bis 8 ist zwischen dem unteren Rand der Gitterhaube 2, der in diesem Fall durch die unteren Enden der Längsstäbe 31 gebildet wird, und der Höhe der Fußraste 2a ein deutlicher Abstand, etwa in der Größenordnung von 10 bis 20 cm, freigelassen. Dieser Zwischenraum ermöglicht es, Unkraut, das mit der zu schützenden Pflanze in die Gitterhaube 2 hineinwächst, ohne Öffnen der Gitterhaube zu entfernen.

**Patentansprüche**

1. Forstpflanzenschutzvorrichtung aus einem in den Boden einsteckbaren Pflock (2) und einer am Pflock angebrachten allgemein rohrförmigen Gitterhaube (1), die eine zu schützende Pflanze zumindest teilweise umgeben kann und entlang wenigstens einer außerhalb des Pflocks verlaufenden Längslinie (7) der Rohrform einen Spalt (20, 24) aufweist, von dem aus sie geöffnet werden kann, dadurch gekennzeichnet, daß der Pflock (2) eine seine Einsenktiefe in den Boden begrenzenden Fußraste (2a) aufweist und daß von der Fußraste (2a) ein neben dem Pflock (2) und wesentlich parallel zu ihm auch in den Boden einsteckbarer Dorn (2b) nach unten absteht.

2. Forstpflanzenschutzvorrichtung nach Anspruch 1, dadurch gekennzeichnet, daß die Gitterhaube (1) scharnierartig oder federnd aufbiegbar ist.

3. Forstpflanzenschutzvorrichtung nach Anspruch 1 oder 2, daduch gekennzeichnet, daß sie aus zwei separat am Pflock (2) anbringbaren Teilen (13, 14) besteht, von denen einer (14) eine zylindrische Rohrform und der andere (13) eine konische Rohrform, die sich nach unten zu erweitert, aufweist, wobei die zylindrische Rohrform auf der konischen Rohrform angeordnet ist.

4. Forstpflanzenschutzvorrichtung nach einem der Ansprüche 1 bis 3, dadurch gekennzeichnet, daß die Gitterstäbe der Gitterhaube (1) aus federndem Draht bestehen, der Längenabschnitte aufweist, die am Spalt enden (Fig. 1, 5).

5. Forstpflanzenschutzvorrichtung nach einem der Ansprüche 1 bis 3, dadurch gekennzeichnet, daß die Gitterstäbe der Gitterhaube (1) aus federnden Blechstreifen (15) bestehen, die am Spalt (4) enden (Fig. 2, 3).

6. Forstpflanzenschutzvorrichtung nach einem der Ansprüche 1 bis 5, dadurch gekennzeichnet, daß die Gitterhaube eine Rückenlinie (6, 16, 26) entlang einer Längslinie der Rohrform mit Befestigungspunkten (3, 17, 27) zum lösbaren Anbringen am Pflock (2) aufweist.

7. Forstpflanzenschutzvorrichtung nach einem der Ansprüche 1 bis 6, dadurch gekennzeichnet, daß sich im Bereich des Spalts oder der Spalte die beiderseitigen Teile der Gitterhaube gegenseitig überlappen.

8. Forstpflanzenschutzvorrichtung nach einem der Ansprüche 1 bis 7, dadurch gekennzeichnet, daß die Gitterhaube (1) aus zwei Teilen (4, 5) besteht, die entlang einer ersten Längslinie (6) lösbar indirekt miteinander verbunden sind, nämlich indem sie beiderseits mit dem Pflock (2) lösbar verbunden sind, und entlang einer zweiten Längslinie (7) durch lösbare Verbindungslaschen (12) miteinander verbunden sind.

9. Forstpflanzenschutzvorrichtung nach einem der Ansprüche 1 bis 8, dadurch gekennzeichnet, daß am Pflock (2) ein Blech (10) mit Einschnitten (11) befestigt ist, in denen die Gitterhaube oder Teilstücke der Gitterhaube (1) festlegbar sind.

10. Forstpflanzenschutzvorrichtung nach einem der Ansprüche 1 bis 9, dadurch gekennzeichnet, daß sich in unterschiedlicher Höhe am Pflock (2) und/oder an der Gitterhaube (1) Verbindungselemente (11) zum Festlegen der Gitterhaube am Pflock befinden.

11. Forstpflanzenschutzvorrichtung nach einem der Ansprüche 8 bis 10, dadurch gekennzeichnet, daß die gegebenenfalls aus den Teilen (4, 5) zusammengesetzte Gitterhaube (1) polygonale, insbesondere sechseckige Horizontalschnitte aufweist.

12. Forstpflanzenschutzvorrichtung nach einem der Ansprüche 1 bis 11, dadurch gekennzeichnet, daß die Oberseite der Gitterhaube (1) durch sie sehnenartig überspannende Gitterteile (8, 9) in Teilflächen unterteilt ist.

**Revendications**

1. Dispositif de protection des plants forestiers, comprenant un piquet (2) à enfoncer dans le sol maintenant un corset (1) de grillage, en général de forme tubulaire, qui entoure au moins en partie un plant à protéger et présente, le long d'au moins une ligne longitudinale (7) de la forme tubulaire non commune avec le piquet, une fente (20, 24) qui permet son ouverture, caractérisé en ce que le piquet (2) est muni d'une pédale (2a) limitant sa hauteur d'enfoncement dans le sol, elle-même se prolongeant vers le bas par un ergot (2b) généralement parallèle au piquet destiné à s'enfoncer dans le sol.

2. Dispositif de protection des plants forestiers selon la revendication 1, caractérisé en ce que le corset de grillage (1) peut être ouvert par un système d'articulation ou par élasticité.

3. Dispositif de protection des plants forestiers selon la revendication 1 ou 2, caractérisé en ce qu'il se compose de deux parties (13, 14) adaptables au piquet (2) séparément, l'une (14) ayant la forme tubulaire d'un cylindre et l'autre (13) la forme tubulaire d'un cône s'élargissant vers le bas; le cylindre étant placé au-dessus du cône.

4. Dispositif de protection des plants forestiers selon une des revendications 1 à 3, caractérisé en ce que les tiges du corset de grillage (1) sont en fil métallique faisant ressort dont des sections de la longeur se terminent au bord de la fente (fig. 1, 5).

5. Dispositif de protection des plants forestiers selon une des revendications 1 à 3, caractérisé en ce que les tiges du corset (1) sont formées de lames de tôle (15) faisant ressort et se terminant à la fente (4) (fig. 2, 3).

6. Dispositif de protection des plants forestiers selon une des revendications 1 à 5, caractérisé en ce que le corset de grillage présente une arête dorsale (6, 16, 26), le long d'une ligne longitudinale de la forme tubulaire, avec des points de fixation amovibles (3, 17, 27) sur le piquet (2).

7. Dispositif de protection des plants forestiers selon une des revendications 1 à 6, caractérisé en ce que les deux parties du corset se recouvrent mutuellement au niveau de la fente ou des fentes.

8. Dispositif de protection des plants forestiers selon une des revendications 1 à 7, caractérisé en ce que le corset de grillage (1) se compose de deux parties (4 et 5) qui sont, le long d'une première ligne longitudinale (6), attachées indirectement entre elles de manière amovible, c'est-à-dire en ce qu'elles sont attachées au deux bords de manière amovible au piquet (2), et, le long d'une deuxième ligne longitudinale (7), réunies entre elles par des attaches amovibles (12).

9. Dispositif de protection des plants forestiers selon une des revendications 1 à 8, caractérisé en ce que sur le piquet (2) est fixé un morceau de tôle (10) à encoches (11) dans lesquelles le corset (1) ou des parties de celui-ci viennent s'encastrer.

10. Dispositif de protection des plants forestiers selon une des revendications 1 à 9, caractérisé en ce que des éléments de fixation (11) se trouvent à différentes hauteurs sur le piquet (2) et/ou sur le corset (1) pour la fixation du corset sur le piquet.

11. Dispositif de protection des plants forestiers selon une des revendications 8 à 10, caractérisé en ce que le corset (1) formé le cas échéant des parties (4, 5), présente une coupe horizontale polygonale, en particulier hexagonale.

12. Dispositif de protection des plants forestiers selon une des revendications 1 à 11, caractérisé en ce que la partie supérieure du corset (1) est divisée en plusieurs segments par des éléments de grille formant sécantes (8, 9).

**Claims**

1. Guard device for forestal plants, the guard device consisting of a stake (2) to be driven into the ground and of a generally tubular jacket (1) of grid material, the jacket being attached to the stake, being capable of at least partially surround a plant to be guarded and having along at least one longitudinal line (7) of the tubular shape, which line runs outside of the stake, a gap (20, 24) starting from which the jacket can be opened, characterized in that the stake (2) has a footrest (2a) for limiting the depth of being driven into the ground, and that from the footrest (2a) a pin (2b) also to be driven into the ground beside the stake (2) and generally parallel to it extends downward.

2. Guard device for plants according to claim 1, characterized in that the grid jacket (1) can be hinged or resiliently bent open.

3. Guard device for plants according to claim 1 or 2, characterized in that it consists of two parts (13, 14) to be separately attached to the stake (2), one (14) of the parts having a cylindrical tubular shape and the other one (13) having a conical tubular shape flaring downwardly, the cylindrical tubular shape being arranged above the conical tubular shape.

4. Guard device for plants according to any of claims 1 to 3, characterized in that the grid elements of the grid jacket (1) consist of springy wire which has length segments ending at the gap (Fig. 1, 5).

5. Guard device for plants according to any of claims 1 to 3, characterized in that the grid elements of the grid jacket (1) consist of springy metal sheet strips terminating at the gap (4) (Fig. 2, 3).

6. Guard device for plants according to any of claims 1 to 5, characterized in that the grid jacket has a back line (6, 16, 26) along a longitudinal line of the tubular shape, the back line being equipped with fixing points (3, 17, 27) for a releasable attachment to the stake (2).

7. Guard device for plants according to any of claims 1 to 6, characterized in that in the zone of the gap or of the gaps the both sides parts of the grid jacket overlap each other.

8. Guard device for plants according to any of claims 1 to 7, characterized in that the grid jacket (1) consists of two parts (4, 5) which along a first longitudinal line (6) are releasably indirectly connected with each other, i.e. by being at both sides releasably connected with the stake (2), and along a second longitudinal line (7) are connected with each other by releasable connection flaps (12).

9. Guard device for plants according to any of claims 1 to 8, characterized in that at the stake (2) a sheet metal (10) having incisions (11) is attached, in which incisions the grid jacket or partial pieces of the grid jacket (1) are fixable.

10. Guard device for plants according to any of claims 1 to 9, characterized in that in different heights at the stake (2) and/or at the grid jacket (1) connecting elements (11) for fixing the grid jacket at the stake are provided.

11. Guard device for plants according to any of claims 8 to 10, characterized in that the grid jacket (1) which may be composed of parts (4, 5) has polygonal, and more particularly hexagonal horizontal sections.

12. Guard device for plants according to any of claims 1 to 11, characterized in that the top face of the grid jacket (1) is subdivided into area parts by grid portions (8, 9) traversing the top face in the manner of chords.

Fig. 1

Fig. 2

1

Fig. 3

Fig. 4

Fig. 5

Fig. 6

Fig. 7

Fig. 8